(19)

**Europäisches Patentamt**
**European Patent Office**
**Office européen des brevets**

(11) **EP 3 875 952 B1**

(12) **EUROPEAN PATENT SPECIFICATION**

(45) Date of publication and mention
of the grant of the patent:
**14.09.2022 Bulletin 2022/37**

(21) Application number: **20160348.7**

(22) Date of filing: **02.03.2020**

(51) International Patent Classification (IPC):
**G01N 30/88** *(2006.01)*    **G01N 30/86** *(2006.01)*
**G01N 30/46** *(2006.01)*    **G01N 30/72** *(2006.01)*
*H01J 49/44* *(2006.01)*    *G01N 30/12* *(2006.01)*
*G01N 1/22* *(2006.01)*    *G01N 1/40* *(2006.01)*
*G01N 1/44* *(2006.01)*

(52) Cooperative Patent Classification (CPC):
**G01N 30/88; G01N 30/8686;** G01N 1/4022;
G01N 1/405; G01N 1/44; G01N 30/12;
G01N 30/463; G01N 30/7206; G01N 2030/128;
G01N 2030/885; G01N 2030/8854;
G01N 2030/8872

(54) **METHOD OF ASSESSING AT LEAST ONE POLYMER COMPOSITION INCLUDING CONTAMINANTS WITH LOW EMISSIONS AND LOW ODOUR**

VERFAHREN ZUR BEURTEILUNG MINDESTENS EINER POLYMERZUSAMMENSETZUNG MIT VERUNREINIGUNGEN MIT GERINGEN EMISSIONEN UND GERINGEM GERUCH

PROCÉDÉ D'ÉVALUATION D'AU MOINS UNE COMPOSITION POLYMÈRE COMPRENANT DES CONTAMINANTS À FAIBLES ÉMISSIONS ET À FAIBLE ODEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.09.2021 Bulletin 2021/36**

(73) Proprietor: **Borealis AG**
**1020 Vienna (AT)**

(72) Inventors:
• **Fuchs, Andreas**
**4021 Linz (AT)**
• **Kaltenbrunner, Theresa**
**4021 Linz (AT)**
• **Huber, Jürgen**
**4021 Linz (AT)**
• **Engleder, Stefanie**
**4021 Linz (AT)**

(74) Representative: **Maiwald Patent- und Rechtsanwaltsgesellschaft mbH
Elisenhof
Elisenstraße 3
80335 München (DE)**

(56) References cited:
**US-B2- 7 167 815**

• **Jinshui Che ET AL: "Determination of volatile compounds in automotive interior materials by thermal desorption GC-MS", Application Note 10363, 2018, pages 1-6, XP055726892, Retrieved from the Internet: URL:https://assets.thermofisher.com/TFS-As sets/CMD/Application-Notes/AN-10363-GC-MS-Auto-Interior-Volatiles-AN10363-EN.pdf [retrieved on 2020-09-02]**
• **"VDA 278 Thermodesorptionsanalyse organischer Emissionen zur Charakterisierung von nichtmetallischen Kfz-Werkstoffen", VDA STANDARD, VERBAND DER AUTOMOBILINDUSTRIE, vol. 278, September 2002 (2002-09), pages 1-30, XP009109456,**
• **BYLINSKI HUBERT ET AL: "Determination of odour concentration by TD-GCxGC-TOF-MS and field olfactometry techniques", MONATSHEFTE FÜR CHEMIE = CHEMICAL MONTHLY, SPRINGER VIENNA, VIENNA, vol. 148, no. 9, 13 July 2017 (2017-07-13) , pages 1651-1659, XP036290268, ISSN: 0026-9247, DOI: 10.1007/S00706-017-2023-8 [retrieved on 2017-07-13]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

   **(Cont. next page)**

- **CABANES ANDREA ET AL: "Odorant composition of post-consumer LDPE bags originating from different collection systems", WASTE MANAGEMENT, ELSEVIER, NEW YORK, NY, US, vol. 104, 24 January 2020 (2020-01-24), pages 228-238, XP086041540, ISSN: 0956-053X, DOI: 10.1016/J.WASMAN.2020.01.021 [retrieved on 2020-01-24]**
- **LIANG ZHIRONG ET AL: "Comprehensive chemical characterization of lubricating oils used in modern vehicular engines utilizing GCxGC-TOFMS", FUEL, IPC SCIENCE AND TECHNOLOGY PRESS, GUILDFORD, GB, vol. 220, 22 February 2018 (2018-02-22), pages 792-799, XP085369342, ISSN: 0016-2361, DOI: 10.1016/J.FUEL.2017.11.142**

**Description**

**Field of the invention**

The present invention relates to a method of assessing polymers with respect to odour and emission profiles.

**Background of the Invention**

Polymers having undesirable odour are widespread. Polymers having relatively high emissions also can be found frequently. It is desirable to select polyolefins in a way such that only the materials having low emission and also acceptable odour are used, i.e. introduced into industrial streams. Assessment of emission via VDA 278 is common in the field. A very basic method for evaluating odour is VDA 270. In this method a panel of at least three trained testers provides a rating on samples subjected to storage and heat treatment. VDA 270 alone provides only a summarised assessment of materials.

Merely assessing polymers as to emissions or odour according to such methods cannot address the long term needs because there are multiple interrelations which are not yet understood. Such interrelations obviously have had limited relevance in the field of virgin reactor made polymers, i.e. polymers not including recycled material. However, it can be expected for the future, certain proportions of recycled polymer necessarily must be fulfilled for all marketed polymers.

Typical odorants found in virgin polyolefins are saturated aldehydes. With increasing amounts of recycled polyolefins cross-contamination with other substances contributing to the overall odour impression must be considered.

Thus, there has been the need for a method allowing an assessment such that crosscontaminations can be assessed and in a further step also controlled.

The present invention aims at overcoming at least in part these needs.

Jinshui Che et al. : "Determination of volatile compounds in automotive interior materials by thermal desorption GC-MS", Application Note 10363, 2018, pages 1-6, XP055726892, discloses determination of the TVOC value of a sample by integration of the chromatographic peak area between C6-C16 with total integrated area toluene peak comparison calculated.

**Summary of the invention**

The present invention is based on the finding that an assessment of odour active substances in polymer samples via comprehensive two-dimensional gas chromatography (GCxGC) coupled with time-of-flight mass spectrometry (TOF-MS) addresses the needs of future polymer compositions, and particularly polyolefins compositions.

The present invention relates to a method for assessing at least one polymer composition including contaminants comprising the step of

(a) carrying out an advanced odorant analysis using comprehensive two-dimensional gas chromatography (GCxGC) coupled to time-of-flight mass spectrometry (TOF-MS)
(b) calculating a toluene response factor (RF) as

$$RF \ (toluene) = \frac{m(toluene)[\mu g]}{Peak \ area \ (toluene)}$$

as the arithmetic mean response factor from individual calibration runs,
(c) semi-quantifying the odorant amount (OA) per substance by multiplying the toluene's average response factor by the peak area of the odorant from the sample analysis run following

$$OA \ [\mu g] = RF(toluene) * peak \ area \ (odorant)$$

(d) calculating the odorants index (OI), whereby the odorants index (OI) is defined as the ratio of two groups of the before semi-quantitatively determined substances according to

$$Odorants \ Index \ (OI) = \frac{ASSA + SMUSA + SST + SFFA + SOSO}{SSA}$$

whereby

- adjusted sum of saturated n-aldehydes (ASSA) is defined as:

$$ASSA = (SSA * AF)$$

where the sum of saturated n-aldehydes (SSA) in the carbon number range of C6-C10 (hexanal, heptanal, octanal, nonanal, decanal) is defined as:

$$SSA = OA_{hexanal} + OA_{heptanal} + OA_{octanal} + OA_{nonanal} + OA_{decanal}$$

and the aldehyde factor (AF) is defined as:

$$AF = (1 + SSA * e^{(SSA*15)})$$

- SMUSA stands for sum of mono-unsaturated n-aldehydes (SMUSA): (Z)-2-heptenal and (Z)-2-nonenal:

$$SMUSA = OA_{(Z)-2-heptenal} + OA_{(Z)-2-nonenal}$$

- SST stands for sum of selected terpenes (SST): D-limonene and eucalyptol:

$$SST = OA_{D-limonene} + OA_{eucalyptol}$$

- SFFA stands for sum of free fatty acids (SFFA) with carbon numbers of C2, C4, C6, C8, C10 (acetic acid, butanoic acid, hexanoic acid, octanoic acid, decanoic acid):

$$SFFA = OA_{acetic\ acid} + OA_{butanoic\ acid} + OA_{hexanoic\ acid} + OA_{octanoic\ acid} + OA_{decanoic\ acid}$$

- SOSO stands for sum of styrene and acetophenone:

$$SOSO = OA_{styrene} + OA_{acetophenone}$$

and

- SSA stands for the total amount of saturated aldehydes in the range of C6-C10 (Sum of saturated aldehydes, SSA) but without a factor:

$$SSA = OA_{hexanal} + OA_{heptanal} + OA_{octanal} + OA_{nonanal} + OA_{decanal}$$

(e) setting aside any polymer composition having an odorants index (OI) above 1.50.

This new method for assessing polymer composition is especially suitable for polymer compositions with complex contents of contaminants and provides a method for determining the amounts of odour active substances. Thereby, a broad variety of different odour-active substances such as saturated and unsaturated aldehydes, terpenes, free fatty acids, styrene and acetophenone can be screened by the advanced odorant analysis according to the invention. The selected odour-active substances screened in the method according to the invention are easily detectable and evaluable by the advanced odorant analysis of the present invention and thereby refer to reference odour-active substances for the method of the invention. In a variation of the advanced odorant analysis as described herein also other potentially odour-active aldehydes or terpenes could be screened provided that these substances are accessible to the comprehensive two-dimensional gas chromatography (GCxGC) coupled to time-of-flight mass spectrometry (TOF-MS).

The method according to the present invention can be used in addition to the determination of volatile organic compounds (VOC), determined according to VDA 278 October 2011, and/or an odour test following the test layout as set forth in VDA 270-B3 (version June 2018). For example the method of the present invention can be used as a prescreening test for excluding polymer compositions with extremely high amounts of contaminants or potentially health damaging contaminants from a VDA 270-B3 test, in which these potentially harmful polymer compositions are subjected to a panel of at least three trained testers.

The method according to the present invention is especially suitable for assessing polymer compositions, which shall be used in odour sensitive applications, such as automotive applications, consumer goods, food and beverage packaging or medical packaging. The method according to the present invention is also especially suitable for assessing polymer compositions, which include amounts of recycling material.

Odour-active substances or odorants are usually volatile organic substances having molecular weight of less than 400 g/mol, which bind to specific sites on olfactory receptors located in the nasal cavity.

Typical odour active substances are esters, aldehydes, ketones, carbon acids, aromatics, amines, terpenes, alcohols, lactones and thiols. In polymer compositions odour-active contaminants are typically aldehydes, carbon acids, and terpenes.

Contaminants in the sense of the present invention are chemical substances, which are present in the assessed polymer compositions, in amounts of less than 1.0 wt%, preferably less than 0.5 wt%, still more preferably less than 0.2 wt% and most preferably less than 0.1 wt%. These chemical substances usually origin from chemical side reactions or are degradation products of components in the assessed polymer compositions.

For the purposes of the present description and of the subsequent claims, the term "recycled waste" is used to indicate a material recovered from post-consumer waste, as opposed to virgin polymers and/or materials. Post-consumer waste refers to objects having completed at least a first use cycle (or life cycle), i.e. having already served their first purpose.

The term "virgin" denotes the newly produced materials and/or objects prior to their first use, which have not already been recycled. The term "recycled material" such as used herein denotes materials reprocessed from "recycled waste".

A polyolefin is a polymer produced from olefin monomers having the general formula $C_nH_{2n}$. Suitably the olefin monomers are selected from alpha-olefin monomers having from 2 to 12 carbon atoms.

**Detailed description**

The present invention relates to a method for assessing at least one polymer composition including contaminants comprising the steps of

(a) carrying out an advanced odorant analysis using comprehensive two-dimensional gas chromatography (GCxGC) coupled to time-of-flight mass spectrometry (TOF-MS)
(b) calculating a toluene response factor (RF) as

$$RF\,(toluene) = \frac{m(toluene)\,[\mu g]}{Peak\ area\,(toluene)}$$

as the arithmetic mean response factor from individual calibration runs,
(c) semi-quantifying the odorant amount (OA) per substance by multiplying the toluene's average response factor by the peak area of the odorant from the sample analysis run following

$$OA\,[\mu g] = RF(toluene) * peak\ area\,(odorant)$$

(d) calculating the odorants index (OI), whereby the odorants index (OI) is defined as the ratio of two groups of the before semi-quantitatively determined substances according to

$$Odorants\ Index\ (OI) = \frac{ASSA + SMUSA + SST + SFFA + SOSO}{SSA}$$

whereby

- adjusted sum of saturated n-aldehydes (ASSA) is defined as:

$$ASSA = (SSA * AF)$$

where the sum of saturated n-aldehydes (SSA) in the carbon number range of C6-C10 (hexanal, heptanal, octanal, nonanal, decanal) is defined as:

$$SSA = OA_{hexanal} + OA_{heptanal} + OA_{octanal} + OA_{nonanal} + OA_{decanal}$$

and the aldehyde factor (AF) is defined as:

$$AF = (1 + SSA * e^{(SSA*15)})$$

- SMUSA stands for sum of mono-unsaturated n-aldehydes (SMUSA): (Z)-2-heptenal and (Z)-2-nonenal:

$$SMUSA = OA_{(Z)-2-heptenal} + OA_{(Z)-2-nonenal}$$

- SST stands for sum of selected terpenes (SST): D-limonene and eucalyptol:

$$SST = OA_{D-limonene} + OA_{eucalyptol}$$

- SFFA stands for sum of free fatty acids (SFFA) with carbon numbers of C2, C4, C6, C8, C10 (acetic acid, butanoic acid, hexanoic acid, octanoic acid, decanoic acid):

$$SFFA = OA_{acetic\ acid} + OA_{butanoic\ acid} + OA_{hexanoic\ acid} + OA_{octanoic\ acid} + OA_{decanoic\ acid}$$

- SOSO stands for sum of styrene and acetophenone:

$$SOSO = OA_{styrene} + OA_{acetophenone}$$

and

- SSA stands for the total amount of saturated aldehydes in the range of C6-C10 (Sum of saturated aldehydes, SSA) but without a factor:

$$SSA = OA_{hexanal} + OA_{heptanal} + OA_{octanal} + OA_{nonanal} + OA_{decanal}$$

(e) setting aside any polymer composition having an odorants index (OI) above 1.50.

The at least one polymer composition is preferably provided in the form of pellets or processed parts which are optionally grinded to smaller parts, such as extruded parts, injection molded parts, grinded extruded parts and/or grinded injection molded parts forming a sample.

This means that the at least one polymer composition to be assessed can be in any processed state and does not include unprocessed reactor powder.

In the case that the pellets or processed parts are too big for the method of the invention, the pellets or processed parts can be grinded or cut to a suitable size. Grinding and cutting methods for reducing the size of the pellets or processed parts are well known in the art and can be applied in the skilled person's discretion.

The at least one polymer composition can be a single polymer composition or a blend of two or more polymer compositions. A blend of two or more polymer composition usually is a mechanical blend of pellets or parts of different polymer compositions as defined above or below.

Before applying the advanced odorant analysis using comprehensive two-dimensional gas chromatography (GCxGC) coupled to time-of-flight mass spectrometry (TOF-MS) as defined above or below usually samples of the at least one polymer composition are prepared. The sample preparation preferably follows the following steps:

(aa) storage of the sample at 23 $\pm$ 2 °C for 1 week;
(ab) weighing 20.0 $\pm$ 0.1 g of the sample in a 1 litre jar and closing with a cap;
(ac) heated the jar up to 80 $\pm$ 2 °C for 2 h $\pm$ 10 min;
(ad) cooling the jar for 5 $\pm$ 1 min at ambient conditions.

Ambient conditions are usually around 23°C and around 50 % relative humidity.

The 1 litre jar preferably is a glass jar. The jar and the cap are preferably clean and free of odours.

It is preferred that before advanced odorant analysis using comprehensive two-dimensional gas chromatography (GCxGC) coupled to time-of-flight mass spectrometry (TOF-MS) a sample of the at least one polymer composition, preferably the sample prepared as described above, is subjected to a sorbent without contact between the sample and the sorbent in a closed 1 litre jar, preferably the closed jar of the sample preparation as defined above, at a temperature in a range of from 23°C to 100°C for a time span of from 10 min to 5 hours to obtain a sorbent loaded with odorants.

A suitable temperature is 80 $\pm$ 2 °C for a time span of 2 h $\pm$ 10 min in order to comply with the set-up of VDA 270-B3.

The sorbent preferably is in form of a compact body such as a cylindrical body, cuboid body, spherical body, a disc-shaped body or any kind of other compact body form or in form of fibres, porous materials or specifically coated materials. Suitable sorbents are usually porous materials such as silica, zeolites or graphitized carbon blacks or coatings made of polydimethylsiloxane (PDMS), polydimethylsiloxane (PDMS) / ethylene glycol (EG) divinylbenzene/polydimethylsiloxane coating (DVB/PDMS), Tenax® (porous polymer resin based on 2.6-diphenylene oxide) and are usually commercially available. Suitable sorbents are e.g. Twister®, MonoTrap™, solid phase micro extraction (SPME) fibres (alle aufzählen?), SPME arrow, thinfilm-SPME, HiSorb™ types and similar.

Preferably the sorbent, more preferably the sorbent body, is placed in a bracket and then situated into the jar above the sample of the at least one polymer composition without contact to the sample.

By increasing the temperature of the closed jar including the sample and the sorbent to 23°C to 100°C for a time span of 10 min to 5 hours volatile contaminants of the at least one polymer composition, preferably odorants comprised in the at least one polymer composition, evaporate from the sample and are loaded onto the sorbent.

The sorbent loaded with odorants is preferably subjected to the comprehensive two-dimensional gas chromatography (GCxGC) coupled to time-of-flight mass spectrometry (TOF-MS).

The comprehensive two-dimensional gas chromatography (GCxGC) coupled to time-of-flight mass spectrometry (TOF-MS) is preferably conducted in a system comprising a thermal desorption system followed by a suitable injection system, a suitable gas chromatograph comprising a comprehensive GCxGC setup and a mass spectrometer connected in series. Suitable parts of the system are commercially available e.g. from Gerstel, Shimadzu, Markes, GL Sciences, CTC Analytics AG, Agilent Technologies and LECO Instrumente GmbH and can be combined appropriately together with suitable software and database.

The thermodesorption which is hyphenated to the comprehensive two-dimensional gas chromatography (GCxGC) coupled to time-of-flight mass spectrometry (TOF-MS) is preferably conducted at a temperature of from 50°C to 400°C, more preferably from 80°C to 350°C, most preferably from 100°C to 325°C usually depending on the sorbent.

Usually, the sorbent manufacturers recommend suitable thermodesorption parameters.

For GL Sciences MonoTrap™ RGC 18 TD for example, a temperature of from 180°C to 250°C is suitable.

Suitable parameters for the comprehensive two-dimensional gas chromatography (GCxGC) coupled to time-of-flight mass spectrometry (TOF-MS) are listed in the description of the determination method below and can be adapted accordingly depending on the used system and the used sorbent.

The qualitative and semi-quantitative evaluation is preferably performed by means of total ion chromatogram (TIC).

Preferably, the comprehensive two-dimensional gas chromatography (GCxGC) coupled to time-of-flight mass spectrometry (TOF-MS) is calibrated using a standard solution comprising volatile chemical substances of a defined concentration. Preferably, the standard solution comprises toluene in a known concentration in a solvent such as methanol, such as about 100 µg/ml toluene in methanol.

The calibration measurement is generally used for determining the toluene response factor (RF).

Usually, the calibration takes place before the measurement of the sorbent loaded with odorants.

The comprehensive two-dimensional gas chromatography (GCxGC) coupled to time-of-flight mass spectrometry (TOF-MS) results in spectra showing signals which are attributed to different odour active substances such as saturated n-aldehydes (SSA) in the carbon number range of C6-C10 (hexanal, heptanal, octanal, nonanal, decanal), mono-unsaturated n-aldehydes (SMUSA) ((Z)-2-heptenal and (Z)-2-nonenal), selected terpenes (SST) (D-limonene and eucalyptol), free fatty acids (SFFA) with carbon numbers of C2, C4, C6, C8, C10 (acetic acid, butanoic acid, hexanoic acid, octanoic acid, decanoic acid) and other selected odorants (SOSO) (styrene and acetophenone).

The signals attributed to these substances are preferably identified and the odorant amount (OA) is determined for each of the odorants. Further, the odorants index (OI) is preferably determined from these odorant amounts (OA).

For not being set aside as having a too high amount of odorants the odorants index (OI) must be 1.50 or lower. The natural lower limit of the odorants index (OI) for polymer composition not containing any odorants detectable by the method according to the invention is 1.00.

It is preferred that the method according to the invention is carried out as described in the experimental part.

Preferably, the at least one polymer composition including contaminants is further assessed by the flowing steps: (f) carrying out a thermodesorption analysis according to VDA 278 and excluding any polymer composition having volatile organic compounds (VOC), determined according to VDA 278 October 2011, in an amount of more than 250 µg/g from the further assessment. The lower limit of the VOC amount can be as low as 0.04 µg/g (decision limit for toluene in the VOC run as defined by VDA 278 October 2011).

It is further preferred that the at least one polymer composition including contaminants is further assessed by the flowing steps:

(g) carrying out an odour test following the test layout as set forth in VDA 270-B3 (version June 2018) and excluding any polymer composition being rated at an odour grade of 4.0 or above from the further assessment. The lower limit of the odour rating can be as low as 1.0.

It is especially preferred that the at least one polymer composition including contaminants is further assessed by both steps (f) and (g).

For not being set aside as having a too high amount of odorants the polymer composition preferably has an odorants index (OI) must be 1.50 or lower, determined as described above or below, an amount of volatile organic compounds (VOC) of 250 µg/g or less, determined according to VDA 278 October 2011, and a VDA 270 B3 (version June 2018) rating of less than an odour grade of 4.0.

The at least one polymer composition can be any kind of polymer composition such as a thermoplastic polymer composition, elastomeric polymer composition or plastomeric polymer composition.

Preferably the at least one polymer composition is a polyolefin composition.

It is preferred that the polyolefin of the polyolefin composition is selected from alpha-olefin homo-or copolymers including one or more alpha-olefin monomers having from 2 to 12 carbon atoms, preferably from 2 to 10 carbon atoms and mostly preferred having from 2 to 8 carbon atoms.

Preferably, the polyolefin is selected from ethylene or propylene based polyolefins such as ethylene homo- or copolymers or propylene homo- or copolymers.

Ethylene copolymers are preferably polymers comprising ethylene monomer units as major component and one or more comonomer units selected from alpha-olefin monomers having from 3 to 12 carbon atoms, preferably alpha-olefin monomers having from 3 to 10 carbon atoms, more preferably alpha-olefin monomers having from 3 to 8 carbon atoms such as propylene, 1-butene, 1-hexene and 1-octene.

The ethylene copolymers can be ethylene random copolymers, ethylene block copolymers, ethylene-based elastomers or ethylene-based plastomers.

Propylene copolymers are preferably polymers comprising propylene monomer units as major component and one or more comonomer units selected from alpha-olefin monomers having from 2 and 4 to 12 carbon atoms, preferably alpha-olefin monomers having from 2 and 4 to 10 carbon atoms, more preferably alpha-olefin monomers having from 2 and 4 to 8 carbon atoms such as ethylene, 1-butene, 1-hexene and 1-octene.

The propylene copolymers can be propylene random copolymers, propylene block copolymers, propylene-based elastomers or propylene-based plastomers.

Preferably, the at least one polymer composition contains units derived from ethylene and propylene in an amount of at least 65 wt.-% with respect to the total composition.

The at least one polymer composition can contain inorganic fillers selected from the group of talc, cellulose, glass fibers, carbon fibers, wood, $TiO_2$, carbon black and/or calcium carbonate as well as derivatives thereof. The inorganic fillers can be present in an amount of 35 wt.-% or less, preferably 30 wt.-% or less. In some embodiments no inorganic filler is present in the at least one polymer composition.

Further, the at least one polymer composition can comprise additives in an amount of 1.0 wt% or below, more preferably 0.7 wt% or below, more preferably 0.5 wt% or below of the at least one polymer composition. Suitable additives are usual additives for utilization with polyolefins, such as stabilizers (e.g. antioxidant agents), metal scavengers and/or UV-stabilizers, antistatic agents and utilization agents (such as processing aid agents).

The at least one polymer composition can be a virgin polymer composition or a polymer composition comprising recyclated waste.

The at least one polymer composition assessed according to the method of the invention and not being set aside is especially suitable for odour sensitive applications, such as automotive applications, consumer goods, food and beverage packaging or medical packaging.

**Experimental**

**Measurement methods**

a) **Advanced odorants analysis using GCxGC/TOF-MS**

**Sample-Form**

Pellets were used.. In case of small parts (e.g. injection moulded parts made from pellets) several parts should be used to obtain the desired sample quantity. In case the part size is too big, the parts must be cut to a size that fits the diameter of the jar opening.

**Calibration standards**

The calibration is carried out by using an external standard method. For this purpose, a calibration solution is applied to a desorption tube filled with Tenax® TA. Therefore, a standard solution of known concentration is required which contains approximately 100 $\mu$g/ml toluene in methanol. The injection volume is 2 $\mu$l. For the injection, the Tenax® TA filled tube is connected to an injection device and purged with a controlled flow of inert gas. The flow rate should be set to about 1 l/min, with a total flow volume of about 2.5 litres in order to remove the applied methanol matrix while toluene remains on the Tenax®. At least two tubes are prepared as described above.

**Sorbents for the odorant trapping**

Sorbents that are used for trapping of volatile substances are well known in the art and can be selected as commercially available compact bodies or fibres such as Twister®, MonoTrap®, Thinfilm-SPME, SPME types and similar. The skilled person is well aware of the possible choices. For the evaluation as described below GL Sciences MonoTrap™ RGC 18 TD was used.

**Sample preparation**

Before the actual sample preparation, the sample was stored in a temperature controlled room at 23 $\pm$ 2 °C for 1 week. After that, 20.0 $\pm$ 0.1 g of the sample were weighed in a 1 litre jar and closed with a cap. The cap and the jar must be clean and free of odours as defined by VDA 270. The day after, the jar was opened and one sorbent body was suspended above the sample without being directly in contact with the sample. The jar was tightly closed with the same cap again and heated up to 80 $\pm$ 2 °C for 2 h $\pm$ 10 min. After that, the jar was cooled down for 5 $\pm$ 1 min at ambient conditions in a fume hood (temperature controlled room).

The loaded sorbent body was carefully transferred from the jar into a preconditioned thermodesorption tube prior to the thermodesorption-GCxGC/MS analysis. The tube in which the sorbent body was inserted is preconditioned for more than 20 min and at a temperature of more than 200 °C under a constant stream of nitrogen.

**Thermodesorption** - **GCxGC/MS analysis**

Comprehensive GCxGC with a temperature modulator or flow modulator using columns of different polarity in a standard or reversed column setup can be used. Helium 5.0 (or higher quality) was used as a carrier gas.

Thermodesorption parameters

Ideal thermodesorption parameters may vary with the actually used sorbent body. For a GL Sciences MonoTrapTM RGC 18 TD and a Gerstel thermodesorption system applicable parameters are stated below:

TDS (Gerstel):

| | |
|---|---|
| Initial Temp.: | 20 °C |
| Initial Time: | 0.00 min |
| Delay Time: | 0.20 min |
| Rate 1: | 60.0 °C/min |
| End Temp. 1: | 200 °C |
| Hold Time 1: | 10.00 min |
| Rate 2: | 0.0 °C/min |
| Transfer Temp.: | 280 °C |
| Standby Temp.: | 50 °C |
| Desorption mode: | Splitless |
| Sample mode: | Sample Remove |

CIS (Gerstel):

| | |
|---|---|
| Use CIS: | enabled |
| Heater mode: | Standard |
| Cryo Cooling: | enabled |
| Initial Temp.: | -150 °C |
| Equilib. Time: | 0.50 min |
| Initial Time: | 0.10 min |
| Rate 1: | 12.0 °C/s |
| End Temp. 1: | 280 °C |
| Hold Time 1: | 10.00 min |
| Rate 2: | 0.0 °C/s |

The thermodesorption of a calibration standard is performed using the following parameters:
TDS (Gerstel):

| | |
|---|---|
| Initial Temp.: | 50 °C |
| Initial Time: | 0.00 min |
| Delay Time: | 0.20 min |
| Rate 1: | 60.0 °C/min |
| End Temp. 1: | 280 °C |
| Hold Time 1: | 5.00 min |
| Rate 2: | 0.0 °C/min |
| Transfer Temp.: | 310 °C |
| Standby Temp.: | 50 °C |
| Desorption mode: | Splitless |
| Sample mode: | Sample Remove |

CIS (Gerstel):

| | |
|---|---|
| Use CIS: | enabled |
| Heater mode: | Standard |
| Cryo Cooling: | enabled |
| Initial Temp.: | -150 °C |
| Equilib. Time: | 0.10 min |
| Initial Time: | 0.00 min |
| Rate 1: | 12.0 °C/s |
| End Temp. 1: | 280 °C |

(continued)

| | |
|---|---|
| Hold Time 1: | 10.00 min |
| Rate 2: | 0.0 °C/s |

Gas chromatograph parameters

The GC oven program used was as follows:

- ◦ Split ratio: 10
- ◦ 40 °C, 1 min hold
- ◦ 3 °C/min → 280 °C, 1 min hold
- ◦ Secondary oven offset: 5 °C
- ◦ Transfer line temperature into MS: 220 °C

A skilled person is well aware detailed GCxGC parameters are dependent on the used columns and setup.
The parameters as given herein are for illustrative purposes only and are not to be meant limiting.

Mass spectrometer parameters

- Scan range 29-450 u
- Acquisition rate 200 spectra/second
- Ion source temperature 200 °C
- The MS should be tuned as suggested by the manufacturer.
- MS Library which allows for tentative identification of the found peaks in the chromatogram.
- The qualitative and semi-quantitative evaluation is performed by means of total ion chromatogram (TIC)

The identification should at least based on a tentative identification using a minimum similarity match of 800 (of 0-999) before a name is assigned.

**Semi-quantitation**

For each calibration run the toluene response factor (RF) is calculated as stated below:

$$RF\ (toluene) = \frac{m(toluene)\,[\mu g]}{Peak\ area\ (toluene)}$$

The individual calibration runs is calculated as the arithmetic mean response factor (for toluene). The odorant amount (OA) is then semi-quantified per substance by multiplying the toluene's average response factor by the peak area of the odorant from the sample analysis run.

$$OA\ [\mu g] = RF(toluene) * peak\ area\ (odorant)$$

**Odorants index**

The odorants index is defined as the ratio of two groups of the before semi-quantitatively determined substances as described below:

Group 1:

The first group refers to the total sum of the following contributing terms:

- Adjusted sum of saturated n-aldehydes (ASSA) is defined as:

$$\circ \quad ASSA = (SSA * AF)$$

where the sum of saturated n-aldehydes (SSA) in the carbon number range of C6-C10 (hexanal, heptanal, octanal, nonanal, decanal) is defined as:

$$SSA = OA_{hexanal} + OA_{heptanal} + OA_{octanal} + OA_{nonanal} + OA_{decanal}$$

and the aldehyde factor (AF) is defined as:

$$AF = (1 + SSA * e^{(SSA*15)})$$

- Sum of mono-unsaturated n-aldehydes (SMUSA): (Z)-2-heptenal and (Z)-2-nonenal:

$$\circ \quad SMUSA = OA_{(Z)-2-heptenal} + OA_{(Z)-2-nonenal}$$

- Sum of selected terpenes (SST): D-limonene and eucalyptol:

$$\circ \quad SST = OA_{D-limonene} + OA_{eucalyptol}$$

- Sum of free fatty acids (SFFA) with carbon numbers of C2, C4, C6, C8, C10 (acetic acid, butanoic acid, hexanoic acid, octanoic acid, decanoic acid):

$$\circ \quad SFFA = OA_{acetic\ acid} + OA_{butanoic\ acid} + OA_{hexanoic\ acid} + OA_{octanoic\ acid} + OA_{decanoic\ acid}$$

- Sum of other selected odorants (SOSO): Styrene and acetophenone:

$$\circ \quad SOSO = OA_{styrene} + OA_{acetophenone}$$

Group 2:

The second group only refers to the total amount of saturated aldehydes in the range of C6-C10 (Sum of saturated aldehydes, SSA) but without a factor:

$$\circ \quad SSA = OA_{hexanal} + OA_{heptanal} + OA_{octanal} + OA_{nonanal} + OA_{decanal}$$

Thus, the odorants index is defined as

$$Odorants\ Index\ (OI) = \frac{ASSA + SMUSA + SST + SFFA + SOSO}{SSA}$$

**b) Determination of volatile organic compounds (VOC) according to VDA 278 (October 2011)**

Thermodesorption analysis was carried out following VDA 278 (October 2011). In this document only the analysis of the VOC values is used in the assessment of the present application. The FOG value- and the listing of identifiable substances are neglected. The document is incorporated in its entirety.

As polymer source the same polymer material having the same lot number as for the advanced odorants analysis using GCxGC/TOF-MS above under a) was used. The test samples were prepared as described in VDA 278 (October 2011).

After the sample preparation procedure the sample is sealed again in a sampling bag as defined by VDA 278 (October 2011). In case of unexpected result variations, the sample must be unpacked and the VDA 278 (October 2011) analysis must be re-tested within the subsequent week without repeating the whole storage procedure.

**c) Odour test following the test layout as set forth in VDA 270-B3 (version June 2018)**

The test setup as described in VDA 270-B3 (version June 2018) must be used except for the following allowable modifications: The number of assessors can exceed three without the need of retesting. Each assessor must receive an own jar for the individual odour evaluation and individual assessments must use whole step ratings only. Half step ratings are not allowed. Rounding of the average odour result must be done in whole steps, too. These modifications have been applied in the evaluation reported in the examples.

As polymer source the same polymer material having the same lot number as for the advanced odorants analysis using GCxGC/TOF-MS above under a) was used. The test samples were prepared as described in VDA 270-B3.

**Examples**

Three polyolefin compositions (samples 1, 2 and 3) were assessed with the advanced odorants analysis using GCxGC/TOF-MS according to the present invention.

**Advanced odorant analysis using comprehensive two-dimensional gas chromatography (GC x GC) coupled to time-of-flight mass spectrometry (TOF-MS)**

For the examples stated in this document a TDS/CIS/GCxGC/TOF-MS was used which comprised a Gerstel autosampler (TDSA2), a thermodesorption system (TDS 3) and a cooled injection system (CIS 4). As a gaschromatograph an Agilent 7890A GC was used. The mass spectrometer was a Leco Pegasus 4D HT time of flight-mass spectrometer with Leco ChromaTOF 4.50.8.0 software as well as the Gerstel Maestro software (1.3.2.33). The used MS-library was NIST 05. The GCxGC system comprised a thermal modulation system using liquid nitrogen for cooling. The MS was tuned and checked regarding leaks prior to the analysis.

Unless already defined by the method description as described above, the used parameters are further defined in detail below:

Sorbent body:

One GL Sciences MonoTrap™ RGC 18 TD sorbent body was placed in a steel net above the sample in a 1 litre brown glass jar (clean and odourless).

Calibration standard

For the toluene calibration a certified EPA 8020/8240 Aromatic Volatiles standard was used, which contained toluene at a concentration of 100.7 $\pm$ 2.3 $\mu$g/ml (certified value).

Thermodesorption parameters

The thermodesorption of the loaded sorbent and the calibration standard was performed according to the suggested parameters in the method description section.

GC parameters

In addition to what was already defined in the method description as described above, further parameters are listed below:
Column setup

| | |
|---|---|
| 1st dim.: | Restek Rxi®-1 HT; 30m x 0.25mm x 0.25$\mu$m |
| 2nd dim.: | Restek Rxi®-17Sil; 2.5m x 0.15mm x 0.15$\mu$m |
| (Initial) target flow: | 1.78 ml/min (entire run) |
| Front inlet septum purge flow: | 3 ml/min |
| Front inlet split ratio: | 10 |

(continued)

| | |
|---|---|
| Modulator temperature offset: | 15 °C |
| Purge pulse time: | 0 s |
| Modulation period: | 15 s |
| Hot pulse time | 3 s |
| Cool time between stages: | 4.5 s |

<u>MS parameters</u>

| | |
|---|---|
| Acquisition delay: | 130 s |
| Start mass: | 29 u |
| End mass | 450 u |
| Acquisition rate: | 200 spectra/second |
| Acquisition voltage: | 1764 |
| Optimised voltage offset: | 200 |
| Electron Energy (Volts): | - 70 |
| Mass defect (mu / 100 u): | 0 |
| Ion source temperature: | 200 °C |

<u>MS-data evaluation</u>

In the data processing method of the ChromaTOF software the minimum similarity match before name is assigned (0 - 999) was set to 800.

For the data processing the signal to noise ratio was set to 150 and the baseline offset was set to 0.8. The results were checked for plausibility by an experienced mass spectroscopist.

The results of the advanced odorant analysis are summarised in the table below:

| Advanced odorant analysis | | Sample 1 | | Sample 2 | | Sample 3 (pre-trial) | |
|---|---|---|---|---|---|---|---|
| Odorant class | Odorant | Peak area | OA / µg | Peak area | OA / µg | Peak area | OA / µg |
| SSA | Hexanal | 11046121 | 0.00404 | 169831649 | 0.06210 | 121158129 | 0.04430 |
| | Heptanal | 4663437 | 0.00171 | 82369278 | 0.03012 | 45968709 | 0.01681 |
| | Octanal | 4918738 | 0.00180 | 28371735 | 0.01037 | n.i. | n.i. |
| | Nonanal | 15044006 | 0.00550 | 32731367 | 0.01197 | 57804361 | 0.02114 |
| | Decanal | 4320975 | 0.00158 | 17167267 | 0.00628 | n.i. | n.i. |
| SMUSA | 2-Heptenal, (Z)- | n.i. | n.i. | n.i. | n.i. | 11165749 | 0.00408 |
| | 2-Nonenal, (Z)- | n.i. | n.i. | n.i. | n.i. | n.i. | n.i. |
| SFFA | Acetic acid | 17711936 | 0.00648 | 9196453 | 0.00336 | 558576712 | 0.20425 |
| | Butanoic acid | n.i. | n.i. | n.i. | n.i. | 178730845 | 0.06535 |
| | Hexanoic acid | n.i. | n.i. | n.i. | n.i. | 20093713 | 0.00735 |
| | Octanoic acid | n.i. | n.i. | n.i. | n.i. | 95609571 | 0.03496 |
| | Decanoic acid | n.i. | n.i. | n.i. | n.i. | 118138041 | 0.04320 |
| SOSO | Styrene | n.i. | n.i. | n.i. | n.i. | 25376688 | 0.00928 |
| | Acetophenone | n.i. | n.i. | n.i. | n.i. | 934036794 | 0.34153 |
| SST | D-Limonene | n.i. | n.i. | n.i. | n.i. | 421391824 | 0.15408 |
| | Eucalyptol | n.i. | n.i. | n.i. | n.i. | 265770443 | 0.09718 |
| | | | | | | | |
| SSA (C6-C10) | | | 0.01462 | | 0.12084 | | 0.08225 |
| SMUSA (C7, C9) | | | n.i. | | | | 0.00408 |
| SFFA (C2, C4, C6, C8, C10) | | | 0.00648 | | 0.00336 | | 0.35510 |
| SOSO (Styrene, Acetophenone) | | | n.i. | | n.i. | | 0.35081 |
| SST (D-Limonene, Eucalyptol) | | | n.i. | | n.i. | | 0.25126 |
| ASSA (SSA*AF) | | | 0.01489 | | 0.21029 | | 0.10548 |
| **Odorants Index, OI (target OI < 1.50)** | | | **1.46** | | **1.77** | | **12.97** |
| VDA 270-B3 / Grade, rounded whole steps (target grade < 4) | | | 2 | | 3 | | not tested |
| VDA 278-VOC value (highest) / µg/g (target VOC < 250 µg/g) | | | 110 (repetition 54) | | 230 | | not tested |

| Standard | c / ug/ml | m / µg | Peak area | RF |
|---|---|---|---|---|
| Toluene Standard 1 | 100.7 | 0.2014 | 539551454 | 3.7327E-10 |
| Toluene Standard 2 | 100.7 | 0.2014 | 562035008 | 3.5834E-10 |
| **Toluene average** | **100.7** | **0.2014** | **550793231** | **3.6565E-10** |

OA...odorant amount

n.i. ...not identified

It can be seen that samples 2 and 3 had to be set aside because the odorants index (OI) was too high. Thereby, sample 3 can be seen as a worst case scenario showing which values for the different contaminants are easily detectable with the method of the present invention.

Sample 1 and sample 2 were both further assessed by determining the amount of VOC according to VDA 278 and by odour analysis according to VDA 270.

VDA 278 testing

As the VDA 278-VOC results (highest and second value) of sample 1 indicated an unexpected result variation the test was repeated within one week. To prevent further emission loss, the sample was kept under sealed conditions as defined in the method description as described above.

| VDA 278-VOC | Sample 1 | Sample 2 |
|---|---|---|
| Result (highest value) | 110 μg/g | 230 μg/g |
| Result (second value) | 22 μg/g | 220 μg/g |
| Repetition (highest value) | 54 μg/g | - |
| Repetition (second value) | 18 μg/g | - |

VDA 270 testing

The average result was rounded to whole numbers and assessors were not allowed to give half step ratings.

| Odour test VDA 270 | Sample 1 | Sample 2 |
|---|---|---|
| Individual result 1 | 2 | 3 |
| Individual result 2 | 4 | 3 |
| Individual result 3 | 2 | 3 |
| Individual result 4 | 2 | - |
| Individual result 5 | 2 | - |
| Individual result 6 | 2 | - |
| **Average result** | **2.3** | **3.0** |
| **VDA 270-B3 Grade** | **2.0** | **3.0** |

Both samples show acceptable results in the VOC analysis and the odour analysis.

**Claims**

1. A method of assessing at least one polymer composition including contaminants comprising the steps of

(a) carrying out an advanced odorant analysis using comprehensive two-dimensional gas chromatography (GCxGC) coupled to time-of-flight mass spectrometry (TOF-MS)
(b) calculating a toluene response factor (RF) as

$$RF\ (toluene) = \frac{m(toluene)\,[\mu g]}{Peak\ area\ (toluene)}$$

as the arithmetic mean response factor from individual calibration runs,
(c) semi-quantifying the odorant amount (OA) per substance by multiplying the toluene's average response factor by the peak area of the odorant from the sample analysis run following

$$OA\ [\mu g] = RF(toluene) * peak\ area\ (odorant)$$

(d) calculating the odorants index (OI), whereby the odorants index (OI) is defined as the ratio of two groups of the before semi-quantitatively determined substances according to

$$Odorants\ Index\ (OI) = \frac{ASSA + SMUSA + SST + SFFA + SOSO}{SSA}$$

whereby

- adjusted sum of saturated n-aldehydes (ASSA) is defined as:

$$ASSA = (SSA * AF)$$

where the sum of saturated n-aldehydes (SSA) in the carbon number range of C6-C10 (hexanal, heptanal, octanal, nonanal, decanal) is defined as:

$$SSA = OA_{hexanal} + OA_{heptanal} + OA_{octanal} + OA_{nonanal} + OA_{decanal}$$

and the aldehyde factor (AF) is defined as:

$$AF = (1 + SSA * e^{(SSA*15)})$$

- SMUSA stands for sum of mono-unsaturated n-aldehydes (SMUSA): (Z)-2-heptenal and (Z)-2-nonenal:

$$SMUSA = OA_{(Z)-2-heptenal} + OA_{(Z)-2-nonenal}$$

- SST stands for sum of selected terpenes (SST): D-limonene and eucalyptol:

$$SST = OA_{D-limonene} + OA_{eucalyptol}$$

- SFFA stands for sum of free fatty acids (SFFA) with carbon numbers of C2, C4, C6, C8, C10 (acetic acid, butanoic acid, hexanoic acid, octanoic acid, decanoic acid):

$$SFFA = OA_{acetic\ acid} + OA_{butanoic\ acid} + OA_{hexanoic\ acid} + OA_{octanoic\ acid} + OA_{decanoic\ acid}$$

and
- SOSO stands for sum of styrene and acetophenone:

$$SOSO = OA_{styrene} + OA_{acetophenone}$$

and
- SSA stands for the total amount of saturated aldehydes in the range of C6-C10 (Sum of saturated aldehydes, SSA) but without a factor:

$$SSA = OA_{hexanal} + OA_{heptanal} + OA_{octanal} + OA_{nonanal} + OA_{decanal}$$

(e) setting aside any polymer composition having an odorants index (OI) above 1.50.

2. The method of claim 1, wherein the at least one polymer composition including contaminants is provided in the form of pellets, extruded parts, injection molded parts, grinded extruded parts, and/or grinded injection molded parts forming a sample.

3. The method of claims 1 or 2, wherein sample preparation takes place before advanced odorant analysis using comprehensive two-dimensional gas chromatography (GCxGC) coupled to time-of-flight mass spectrometry (TOF-MS) by the following steps

    (aa) storage of the sample at 23 ± 2 °C for 1 week;
    (ab) weighing 20.0 ± 0.1 g of the sample in a 1 litre jar and closing with a cap;
    (ac) heating the jar up to 80 ± 2 °C for 2 h ± 10 min;
    (ad) cooling the jar for 5 ± 1 min at ambient conditions.

4. The method according to any of the preceding claims, whereby before advanced odorant analysis using comprehensive two-dimensional gas chromatography (GCxGC) coupled to time-of-flight mass spectrometry (TOF-MS) a sample of the at least one polymer composition is subjected to a sorbent without contact between the sample and the sorbent in a closed 1 litre jar at a temperature in a range of from 23°C to 100°C for a time span of from 10 min to 5 hours to obtain a sorbent loaded with odorants.

5. The method according to claim 4, wherein the sorbent loaded with odorants is subjected to the comprehensive two-dimensional gas chromatography (GCxGC) coupled to time-of-flight mass spectrometry (TOF-MS).

6. The method according to any of the preceding claims, wherein thermodesorption which is hyphenated to the comprehensive two-dimensional gas chromatography (GCxGC) coupled to time-of-flight mass spectrometry (TOF-MS) is conducted at a thermodesorption temperature of from 50°C to 400°C.

7. The method according to claim 1, wherein the at least one polymer composition including contaminants is provided in the form of pellets forming a sample and wherein sample preparation takes place before advanced odorant analysis using comprehensive two-dimensional gas chromatography (GCxGC) coupled to time-of-flight mass spectrometry (TOF-MS) by the following steps

    (aa) storage of the sample at 23 ± 2 °C for 1 week;
    (ab) weighing 20.0 ± 0.1 g of the sample in a 1 litre jar and closing with a cap;
    (ac) heating the jar up to 80 ± 2 °C for 2 h ± 10 min;
    (ad) cooling the jar for 5 ± 1 min at ambient conditions;
    and
    whereby before advanced odorant analysis using comprehensive two-dimensional gas chromatography (GCxGC) coupled to time-of-flight mass spectrometry (TOF-MS) a sample of the at least one polymer composition is subjected to a sorbent without contact between the sample and the sorbent in a closed 1 litre jar at a temperature in a range of from 23°C to 100°C for a time span of from 10 min to 5 hours to obtain a sorbent loaded with odorants;
    wherein the sorbent loaded with odorants is subjected to the comprehensive two-dimensional gas chromatography (GCxGC) coupled to time-of-flight mass spectrometry (TOF-MS).

8. The method according to any of the preceding claims, wherein the at least one polymer composition including contaminants is further assessed by the following steps:
(f) carrying out a thermodesorption analysis according to VDA 278 and excluding any polymer composition having volatile organic compounds (VOC), determined according to VDA 278 October 2011, in an amount of more than 250 μg/g from the further assessment.

9. The method according to any of the preceding claims, wherein the at least one polymer composition including contaminants is further assessed by the following steps:
(g) carrying out an odour test following the test layout as set forth in VDA 270-B3 version June 2018 and excluding any polymer composition being rated at an odour grade of 4.0 or above from the further assessment.

10. The method according to any of the preceding claims, whereby the at least one polymer composition including contaminants is a polyolefin composition.

11. The method according to any of the preceding claims, whereby the at least one polymer composition contains units derived from ethylene and propylene in an amount of at least 65 wt.-% with respect to the total composition.

12. The method according to any of the preceding claims, whereby the at least one polymer composition contains inorganic fillers selected from the group of talc, cellulose, glass fibers, carbon fibers, wood, $TiO_2$, carbon black and/or calcium carbonate as well as derivatives thereof.

**Patentansprüche**

1. Verfahren zur Beurteilung von mindestens einer Polymerzusammensetzung, die Verunreinigungen enthält, umfassend die Schritte

   (a) Durchführung einer fortgeschrittenen Odorantanalyse unter Verwendung umfassender zweidimensionaler Gaschromatographie (GCxGC) gekoppelt mit Time-of-Flight-Massenspektrometrie (TOF-MS)
   (b) Berechnen eines Toluol-Response-Faktors (RF) als

$$RF(Toluol) = \frac{m(Toluol)\,[\mu g]}{Peakfläche\,(Toluol)}$$

   als arithmetisches Mittel der Response-Faktoren aus den einzelnen Kalibrierungsversuchen,
   (c) Halbquantifizierung der Odorantmenge (OA) pro Substanz durch Multiplikation des durchschnittlichen Response-Faktors des Toluols mit der Peakfläche des Odorants aus dem Probenanalyseversuch wie folgt

$$OA\;[\mu g]\;=\;RF(Toluol)\;*\;Peakfläche\;(Odorant)$$

   (d) Berechnung des Odorantindexes (OI), wobei der Odorantindex (OI) definiert ist als das Verhältnis zweier Gruppen der zuvor halbquantitativ bestimmten Substanzen gemäß

$$Odorantindex(OI) = \frac{ASSA + SMUSA + SST + SFFA + SOSO}{SSA}$$

   wobei

   - die angepasste Summe der gesättigten n-Aldehyde (ASSA) definiert ist als:

$$ASSA\;=\;(SSA*AF)$$

   wobei die Summe der gesättigten n-Aldehyde (SSA) im Kohlenstoffzahlbereich von C6-C10 (Hexanal, Heptanal, Octanal, Nonanal, Decanal) definiert ist als:

$$SSA = OA_{Hexanal} + OA_{Heptanal} + OA_{Octanal} + OA_{Nonanal} + OA_{Decanal}$$

   und der Aldehydfaktor (AF) definiert ist als:

$$AF\;=\;(1\;+\;SSA\;*e^{(SSA*15)})$$

   - SMUSA für die Summe der einfach ungesättigten n-Aldehyde (SMUSA) steht: (Z)-2-Heptenal und (Z)-2-Nonenal:

$$\text{SMUSA} = \text{OA}_{(Z)-2-\text{Heptenal}} + \text{OA}_{(Z)-2-\text{Nonenal}}$$

- SST für die Summe der ausgewählten Terpene (SST) steht: D-Limonen und Eukalyptol:

$$\text{SST} = \text{OA}_{\text{D-Limonen}} + \text{OA}_{\text{Eucalyptol}}$$

- SFFA für die Summe der freien Fettsäuren (SFFA) mit den Kohlenstoffzahlen C2, C4, C6, C8, C10 (Essigsäure, Buttersäure, Hexansäure, Octansäure, Decansäure) steht:

$$\text{SFFA} = \text{OA}_{\text{Essigsäure}} + \text{OA}_{\text{Buttersäure}} + \text{OA}_{\text{Hexansäure}} + \text{OA}_{\text{Octansäure}} +$$
$$\text{OA}_{\text{Decansäure}}$$

und
- SOSO für die Summe von Styrol und Acetophenon steht:

$$\text{SOSO} = \text{OA}_{\text{Styrol}} + \text{OA}_{\text{Acetophenon}}$$

und
- SSA für die Gesamtmenge der gesättigten Aldehyde im Bereich C6-C10 (Summe der gesättigten Aldehyde, SSA), jedoch ohne Faktor steht:

$$\text{SSA} = \text{OA}_{\text{Hexanal}} + \text{OA}_{\text{Heptanal}} + \text{OA}_{\text{Octanal}} + \text{OA}_{\text{Nonanal}} + \text{OA}_{\text{Decanal}}$$

(e) alle Polymerzusammensetzungen mit einem Odorantindex (OI) über 1,50 ausnehmen.

2. Verfahren nach Anspruch 1, wobei die mindestens eine Polymerzusammensetzung, die Verunreinigungen enthält, in Form von Pellets, extrudierten Teilen, spritzgegossenen Teilen, gemahlenen extrudierten Teilen und/oder gemahlenen spritzgegossenen Teilen bereitgestellt wird, die eine Probe bilden.

3. Verfahren nach Ansprüchen 1 oder 2, wobei die Probenzubereitung vor der fortgeschrittenen Odorantanalyse unter Verwendung umfassender zweidimensionaler Gaschromatographie (GCxGC) gekoppelt mit Time-of-Flight-Massenspektrometrie (TOF-MS) durch die folgenden Schritte erfolgt

(aa) Lagerung der Probe bei 23 ± 2°C für 1 Woche;
(ab) Einwiegen von 20,0 ± 0,1 g der Probe in ein 1-Liter-Gefäß und Verschließen mit einem Deckel;
(ac) Erhitzen des Gefäßes auf 80 ± 2°C für 2 h ± 10 min;
(ad) Abkühlung des Gefäßes für 5 ± 1 min bei Umgebungsbedingungen.

4. Verfahren nach einem der vorangehenden Ansprüche, wobei vor der fortgeschrittenen Odorantanalyse unter Verwendung umfassender zweidimensionaler Gaschromatographie (GCxGC) gekoppelt mit Time-of-Flight-Massenspektrometrie (TOF-MS) eine Probe der mindestens einen Polymerzusammensetzung einem Sorptionsmittel ohne Kontakt zwischen der Probe und dem Sorptionsmittel in einem geschlossenen 1-Liter-Gefäß bei einer Temperatur im Bereich von 23°C bis 100°C für eine Zeitspanne von 10 min bis 5 Stunden ausgesetzt wird, um ein mit Odorantien beladenes Sorptionsmittel zu erhalten.

5. Verfahren nach Anspruch 4, wobei das mit Odorantien beladene Sorptionsmittel der umfassenden zweidimensionalen Gaschromatographie (GCxGC) gekoppelt mit Time-of-Flight-Massenspektrometrie (TOF-MS) unterzogen wird.

6. Verfahren nach einem der vorangehenden Ansprüche, wobei Thermodesorption, die verbunden ist mit der umfassenden zweidimensionalen Gaschromatographie (GCxGC) gekoppelt mit Time-of-Flight-Massenspektrometrie (TOF-MS) durchgeführt wird, bei einer Thermodesorptionstemperatur von 50°C bis 400°C erfolgt.

**7.** Verfahren nach Anspruch 1, wobei die mindestens eine Polymerzusammensetzung, die Verunreinigungen enthält, in Form von Pellets bereitgestellt wird, die eine Probe bilden, und wobei die Probenzubereitung vor der fortgeschrittenen Odorantanalyse unter Verwendung umfassender zweidimensionaler Gaschromatographie (GCxGC) gekoppelt mit Time-of-Flight-Massenspektrometrie (TOF-MS) durch die folgenden Schritte erfolgt

(aa) Lagerung der Probe bei 23 ± 2°C für 1 Woche;
(ab) Einwiegen von 20,0 ± 0,1 g der Probe in ein 1-Liter-Gefäß und Verschließen mit einem Deckel;
(ac) Erhitzen des Gefäßes auf 80 ± 2°C für 2 h ± 10 min;
(ad) Abkühlen des Gefäßes für 5 ± 1 min bei Umgebungsbedingungen;
und
wobei vor der fortgeschrittenen Odorantanalyse unter Verwendung umfassender zweidimensionaler Gaschromatographie (GCxGC) gekoppelt mit Time-of-Flight-Massenspektrometrie (TOF-MS) eine Probe der mindestens einen Polymerzusammensetzung einem Sorptionsmittel ohne Kontakt zwischen der Probe und dem Sorptionsmittel in einem geschlossenen 1-Liter-Gefäß bei einer Temperatur im Bereich von 23°C bis 100°C für eine Zeitspanne von 10 min bis 5 Stunden ausgesetzt wird, um ein mit Odorantien beladenes Sorptionsmittel zu erhalten;
wobei das mit Odorantien beladene Sorptionsmittel der umfassenden zweidimensionalen Gaschromatographie (GCxGC) gekoppelt mit Time-of-Flight-Massenspektrometrie (TOF-MS) unterzogen wird.

**8.** Verfahren nach einem der vorangehenden Ansprüche, wobei die mindestens eine Polymerzusammensetzung, die Verunreinigungen enthält, weiterhin durch die folgenden Schritte beurteilt wird:
(f) Durchführung einer Thermodesorptionsanalyse nach VDA 278 und Ausschluss jeder Polymerzusammensetzung mit flüchtigen organischen Verbindungen (VOC), bestimmt gemäß VDA 278 Oktober 2011, in einer Menge von mehr als 250 µg/g von der weiteren Beurteilung.

**9.** Verfahren nach einem der vorangehenden Ansprüche, wobei die mindestens eine Polymerzusammensetzung, die Verunreinigungen enthält, weiterhin durch die folgenden Schritte beurteilt wird:
(g) Durchführung einer Geruchsprüfung nach dem Prüfschema gemäß VDA 270-B3, Version Juni 2018, und Ausschluss jeder Polymerzusammensetzung, die mit einer Geruchsnote von 4,0 oder höher bewertet wurde, von der weiteren Beurteilung.

**10.** Verfahren nach einem der vorangehenden Ansprüche, wobei die mindestens eine Polymerzusammensetzung, die Verunreinigungen enthält, eine Polyolefinzusammensetzung ist.

**11.** Verfahren nach einem der vorangehenden Ansprüche, wobei die mindestens eine Polymerzusammensetzung von Ethylen und Propylen abgeleitete Einheiten in einer Menge von mindestens 65 Gew.-%, bezogen auf die Gesamtzusammensetzung, enthält.

**12.** Verfahren nach einem der vorangehenden Ansprüche, wobei die mindestens eine Polymerzusammensetzung anorganische Füllstoffe, ausgewählt aus der Gruppe von Talkum, Cellulose, Glasfasern, Kohlenstofffasern, Holz, $TiO_2$, Ruß und/oder Calciumcarbonat sowie Derivate davon, enthält.

**Revendications**

**1.** Procédé d'évaluation d'au moins une composition de polymère contenant des contaminants, comprenant les étapes de

(a) mise en œuvre d'une analyse d'odorisants avancée utilisant une chromatographie gazeuse bidimensionnelle (GCxGC) exhaustive couplée à une spectrométrie de masse à temps de vol (TOF-MS),
(b) calcul d'un facteur de réponse de toluène (RF) sous la forme

$$RF \ (toluène) = \frac{m \ (toluène) \ [µg]}{Superficie \ de \ pic \ (toluène)}$$

en tant que facteur de réponse arithmétique moyen à partir de passages d'étalonnage individuels,

(c) semi-quantification de la quantité d'odorisants (OA) par substance par multiplication du facteur de réponse moyen du toluène par la superficie de pic de l'odorisant provenant du passage d'analyse d'échantillon conformément à OA [pg] = *RF (toluène) \* superficie de pic (odorisant)*

(d) calcul de l'indice d'odorisants (OI), lequel indice d'odorisants (OI) est défini par le rapport de deux groupes des substances avant détermination semi-quantitative conformément à

$$\text{Indice d'odorisants (OI)} = \frac{ASSA + SMUSA + SST + SFFA + SOSO}{SSA}$$

où

- la somme ajustée des n-aldéhydes saturés (ASSA) est définie par :

$$ASSA = (SSA * AF)$$

où la somme des n-aldéhydes saturés (SSA) ayant un nombre de carbones dans la plage de C6 à C10 (hexanal, heptanal, octanal, nonanal, décanal) est définie par :

$$SSA = OA_{hexanal} + OA_{heptanal} + OA_{octanal} + OA_{nonanal} + OA_{décanal}$$

et le facteur d'aldéhyde (AF) est défini par :

$$AF = (1 + SSA * e^{(SSA*15)})$$

- SMUSA désigne la somme des n-aldéhydes monoinsaturés (SMUSA) : (Z)-2-hepténal et (Z)-2-nonénal :

$$SMUSA = OA_{(Z)-2-hepténal} + OA_{(Z)-2-nonénal}$$

- SST désigne la somme de terpènes sélectionnés (SST) : D-limonène et eucalyptol :

$$SST = OA_{D-limonène} + OA_{eucalyptol}$$

- SFFA désigne la somme des acides gras libres ayant un nombre de carbones de C2, C4, C6, C8, C10 (acide acétique, acide butanoïque, acide hexanoïque, acide octanoïque, acide décanoïque) :

$$SFFA = OA_{acide\ acétique} + OA_{acide\ butanoïque} + OA_{acide\ hexanoïque} + OA_{acide\ octanoïque} + OA_{acide\ décanoïque}$$

et

- SOSO désigne la somme du styrène et de l'acétophénone

$$SOSO = OA_{styrène} + OA_{acétophénone}$$

et

- SSA désigne la quantité totale des aldéhydes saturés en C6 à C10 (somme des aldéhydes saturés, SSA), mais sans facteur :

$$SSA = OA_{hexanal} + OA_{heptanal} + OA_{octanal} + OA_{nonanal} + OA_{décanal}$$

(e) mise à l'écart de toute composition de polymère ayant un indice d'odorisants (OI) supérieur à 1,50.

2.  Procédé selon la revendication 1, dans lequel l'au moins une composition de polymère contenant des contaminants se présente sous la forme de pastilles, de pièces extrudées, de pièces moulées par injection, de pièces extrudées broyées, et/ou de pièces moulées par injection broyées formant un échantillon.

3.  Procédé selon la revendication 1 ou 2, dans lequel la préparation d'échantillon a lieu avant l'analyse d'odorisants avancée utilisant une chromatographie gazeuse bidimensionnelle (GCxGC) exhaustive couplée à une spectrométrie de masse à temps de vol (TOF-MS), par les étapes suivantes,

    (aa) stockage de l'échantillon à 23 ± 2°C pendant 1 semaine ;
    (ab) pesée de 20,0 ± 0,1 g de l'échantillon dans un pot de 1 litre et fermeture avec un capuchon ;
    (ac) chauffage du pot jusqu'à 80 ± 2°C pendant 2 heures ± 10 minutes ;
    (ad) refroidissement du pot pendant 5 ± 1 minutes dans les conditions ambiantes.

4.  Procédé selon l'une quelconque des revendications précédentes, dans lequel, avant l'analyse d'odorisants avancée utilisant une chromatographie gazeuse bidimensionnelle (GCxGC) exhaustive couplée à une spectrométrie de masse à temps de vol (TOF-MS), un échantillon de l'au moins une composition de polymère est soumis à un sorbant sans contact entre l'échantillon et le sorbant dans un pot fermé de 1 litre à une température dans la plage de 23°C à 100°C pendant une période de 10 minutes à 5 heures pour que soit obtenu un sorbant chargé d'odorisants.

5.  Procédé selon la revendication 4, dans lequel le sorbant chargé d'odorisants est soumis à la chromatographie gazeuse bidimensionnelle (GCxGC) exhaustive couplée à une spectrométrie de masse à temps de vol (TOF-MS).

6.  Procédé selon l'une quelconque des revendications précédentes, dans lequel la désorption thermique qui est reliée à la chromatographie gazeuse bidimensionnelle (GCxGC) exhaustive couplée à une spectrométrie de masse à temps de vol (TOF-MS) est effectuée à une température de désorption thermique de 50°C à 400°C.

7.  Procédé selon la revendication 1, dans lequel au moins une composition de polymère contenant des contaminants se présente sous la forme de pastilles formant un échantillon, et dans lequel la préparation d'échantillon a lieu avant l'analyse d'odorisants avancée utilisant une chromatographie gazeuse bidimensionnelle (GCxGC) exhaustive couplée à une spectrométrie de masse à temps de vol (TOF-MS) par les étapes suivantes,

    (aa) stockage de l'échantillon à 23 ± 2°C pendant 1 semaine ;
    (ab) pesée de 20,0 ± 0,1 g de l'échantillon dans un pot de 1 litre et fermeture avec un capuchon ;
    (ac) chauffage du pot jusqu'à 80 ± 2°C pendant 2 heures ± 10 minutes ;
    (ad) refroidissement du pot pendant 5 ± 1 minutes dans les conditions ambiantes ; et
    dans lequel, avant l'analyse d'odorisants avancée utilisant une chromatographie gazeuse bidimensionnelle (GCxGC) exhaustive couplée à une spectrométrie de masse à temps de vol (TOF-MS), un échantillon de l'au moins une composition de polymère est soumis à un sorbant sans contact entre l'échantillon et le sorbant dans un pot fermé de 1 litre à une température dans la plage de 23°C à 100°C pendant une période de 10 minutes à 5 heures pour que soit obtenu un sorbant chargé d'odorisants ;
    dans lequel le sorbant chargé d'odorisants est soumis à la chromatographie gazeuse bidimensionnelle (GCxGC) exhaustive couplée à une spectrométrie de masse à temps de vol (TOF-MS).

8.  Procédé selon l'une quelconque des revendications précédentes, dans lequel l'au moins une composition de polymère contenant des contaminants est en outre évaluée par les étapes suivantes :
    (f) mise en œuvre d'une analyse de désorption thermique conformément à la norme VDA 278, toute composition de polymère ayant des composés organiques volatils (COV), déterminés conformément à la norme VDA 278 d'octobre 2011, en une quantité supérieure à 250 µg/g étant exclue de l'évaluation supplémentaire.

9.  Procédé selon l'une quelconque des revendications précédentes, dans lequel l'au moins une composition de polymère contenant des contaminants est en outre évaluée par les étapes suivantes :
    (g) mise en œuvre d'un test d'odeur après le plan de test comme indiqué dans la norme VDA 270-B3, version juin 2018, toute composition de polymère ayant été notée à un grade d'odeur de 4,0 ou plus étant exclue de l'évaluation supplémentaire.

10. Procédé selon l'une quelconque des revendications précédentes, dans lequel l'au moins une composition de polymère contenant des contaminants est une composition de polyoléfine.

11. Procédé selon l'une quelconque des revendications précédentes, dans lequel l'au moins une composition de polymère contient des motifs dérivés d'éthylène et de propylène en une quantité d'au moins 65 % en poids par rapport à la composition totale.

12. Procédé selon l'une quelconque des revendications précédentes, dans lequel l'au moins une composition de polymère contient des charges inorganiques choisies dans le groupe du talc, de la cellulose, des fibres de verre, des fibres de carbone, du bois, du $TiO_2$, du noir de carbone et/ou du carbonate de calcium ainsi que de leurs dérivés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JINSHUI CHE et al.** Determination of volatile compounds in automotive interior materials by thermal desorption GC-MS. *Application Note,* 2018, vol. 10363, 1-6